(19) **Europäisches Patentamt / European Patent Office / Office européen des brevets**

(11) **EP 4 776 233 A1**

(12) **EUROPEAN PATENT APPLICATION**
published in accordance with Art. 153(4) EPC

(43) Date of publication:
**15.07.2026 Bulletin 2026/29**

(21) Application number: **23953689.9**

(22) Date of filing: **28.09.2023**

(51) International Patent Classification (IPC):
**G06T 17/05** (2011.01)  **H04W 4/38** (2018.01)

(52) Cooperative Patent Classification (CPC):
**G06T 17/005; G06T 17/05; G06T 17/10;**
**G06T 2210/61**

(86) International application number:
**PCT/CN2023/122676**

(87) International publication number:
**WO 2025/065541 (03.04.2025 Gazette 2025/14)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(71) Applicant: **HUAWEI TECHNOLOGIES CO., LTD.**
**Shenzhen 518129 (CN)**

(72) Inventors:
• **MA, He**
  **Shenzhen, Guangdong 518129 (CN)**
• **MA, Mengyao**
  **Shenzhen, Guangdong 518129 (CN)**
• **LI, Jiahui**
  **Shenzhen, Guangdong 518129 (CN)**
• **LUO, Jiajin**
  **Shenzhen, Guangdong 518129 (CN)**

(74) Representative: **Epping - Hermann - Fischer**
**Patentanwaltsgesellschaft mbH**
**Schloßschmidstraße 5**
**80639 München (DE)**

(54) **ENVIRONMENT RECONSTRUCTION METHOD AND COMMUNICATION APPARATUS**

(57) This application provides an environment reconstruction method and a communication apparatus. The method includes: A first device obtains first indication information, where the first indication information indicates resolution information of an environment map, and the environment map includes a base element. The first device controls a resolution of the base element based on the first indication information, where a type of the base element includes one or more geometry types and/or one or more attribute types. In embodiments of this application, the first device may obtain indication information indicating the resolution information of the environment map, and control the resolution of the base element based on the indication information, so that the resolution can be used when the environment map is sent or received, to improve flexibility of environment reconstruction. In addition, because the environment map may include a plurality of types of base elements, a complex structure in the environment map can be processed without introducing excessive parameters, to reduce calculation complexity and a data transmission size.

FIG. 7

**Description**

**TECHNICAL FIELD**

This application relates to the communication field, and more specifically, to an environment reconstruction method and a communication apparatus.

**BACKGROUND**

During environment reconstruction, a plurality of terminal devices may sense a same environment from different angles of view. Therefore, sensing results of the plurality of terminal devices may be sent to a base station, and the base station fuses the sensing results into a complete and large environment map, or performs another sensing task based on a fusion result, to reduce power consumption and transmission overheads of each terminal device. In addition, because the terminal devices may observe different angles of view, blocking or a blind area caused by an obstacle may be addressed by fusing the sensing results of the plurality of devices, to achieve finer-grained reconstruction or better task execution effect. Currently, raw environment information may be collected through optical scanning, a lidar, visual simultaneous localization and mapping (simultaneous localization and mapping, SLAM), remote sensing, light field reconstruction, or the like, and then the collected raw environment information is processed based on different environment reconstruction solutions. Currently, all the environment reconstruction solutions are applicable only to a single geometry type. In addition, in existing solutions, a configuration of an environment reconstruction resolution includes only a coarse-grained unified configuration and a configuration of quantization precision of numeric values. Therefore, the following problems exist: (1) Lack of a standard and universality: Environment reconstruction with different geometry types and resolutions is needed for different application scenarios and different tasks, and there is no universal definition or solution. (2) Increasing pressure on air interface transmission: Different data precision and resolutions are needed for different tasks and different spaces. If a unified configuration is used, a large amount of data is generated on a device side, causing huge pressure on air interface transmission in a data feedback and reporting stage. (3) Difficulty in processing a complex structure: When a single geometry type is used to fit a complex geometric solid, many parameters may need to be introduced, leading to an increase in calculation complexity. (4) Data storage problems: If a plurality of environment reconstruction solutions are used for environment reconstruction in a large-scale complex scenario, a large amount of complex data in different formats is generated, causing great challenges to data compression and storage. (5) Poor capability of adapting to a dynamic environment: A solution with a single geometry type and a single resolution configuration can hardly adapt to a rapid change in an environment.

**SUMMARY**

This application provides an environment reconstruction method and a communication apparatus, to improve flexibility of environment reconstruction and reduce a data transmission size.

According to a first aspect, an environment reconstruction method is provided. The method includes: A first device obtains first indication information, where the first indication information indicates resolution information of an environment map, and the environment map includes a base element. The first device controls a resolution of the base element based on the first indication information.

In this embodiment of this application, the first device may obtain indication information indicating the resolution information of the environment map, and control the resolution of the base element based on the indication information, so that the resolution can be used when the environment map is sent or received, to improve flexibility of environment reconstruction. In addition, because the environment map may include a plurality of types of base elements, a complex structure in the environment map can be processed without introducing excessive parameters, to reduce calculation complexity and a data transmission size.

With reference to the first aspect, in some implementations of the first aspect, that the first device controls the resolution of the base element based on the first indication information includes: The first device controls a parameter resolution and/or a quantity resolution of the base element based on the first indication information.

With reference to the first aspect, in some implementations of the first aspect, a type of the base element includes a geometry type and/or an attribute type. The geometry type includes at least one of the following: a point, a straight line, a curve, a plane, a curved surface, a voxel, a sphere, a prism, a cylinder, a cone, and an octree. The attribute type includes at least one of the following: a material, a texture, a color, magnetic permeability, a dielectric constant, a scattering coefficient, and mass.

With reference to the first aspect, in some implementations of the first aspect, the first indication information includes a control parameter resolution and/or the quantity resolution of the base element.

With reference to the first aspect, in some implementations of the first aspect, the first indication information includes an attribute parameter resolution.

With reference to the first aspect, in some implementations of the first aspect, the method further includes: The first device obtains second indication information, where the second indication information indicates a correspondence between the base element and a resolution, and the first indication information is an index of the correspondence.

With reference to the first aspect, in some implementations of the first aspect, the method further includes: The first device sends and/or receives a first environment map based on the first indication information.

With reference to the first aspect, in some implementations of the first aspect, the method further includes: The first device sends and/or receives resolution information corresponding to the first environment map.

With reference to the first aspect, in some implementations of the first aspect, the first indication information includes a plurality of pieces of resolution information, and all of the plurality of pieces of resolution information correspond to different areas of the environment map and/or correspond to different sensing tasks.

In this embodiment of this application, different areas of the environment map and/or different sensing tasks may respectively correspond to different resolutions, and the first device may perform sensing for different areas of the environment map and/or different sensing tasks by using different resolutions, to improve flexibility of environment reconstruction.

With reference to the first aspect, in some implementations of the first aspect, correspondences between all of the plurality of pieces of resolution information and different areas of the environment map are indicated by area identifiers of the different areas, or are indicated by different time-frequency resources; and correspondences between all of the plurality of pieces of resolution information and different sensing tasks are indicated by identifiers of the different sensing tasks, or are indicated by the different time-frequency resources.

With reference to the first aspect, in some implementations of the first aspect, the first indication information is received from a second device, or is agreed upon in a protocol, or is preset on the first device.

With reference to the first aspect, in some implementations of the first aspect, the first indication information is received from the second device, and the method further includes: The first device sends sensing capability information to the second device, to enable the second device to determine the first indication information based on the sensing capability information.

In this embodiment of this application, the second device may determine a resolution of the environment map based on a sensing capability reported by the first device, so that different resolutions of the environment map can be determined for different devices, to improve flexibility of environment reconstruction.

According to a second aspect, an environment reconstruction method is provided. The method includes: A second device sends first indication information to a first device, where the first indication information indicates resolution information of an environment map, and the environment map includes a base element, to enable the first device to control a resolution of the base element based on the first indication information.

With reference to the second aspect, in some implementations of the second aspect, a type of the base element includes a geometry type and/or an attribute type. The geometry type includes at least one of the following: a point, a straight line, a curve, a plane, a curved surface, a voxel, a sphere, a prism, a cylinder, a cone, and an octree. The attribute type includes at least one of the following: a material, a texture, a color, magnetic permeability, a dielectric constant, a scattering coefficient, and mass.

With reference to the second aspect, in some implementations of the second aspect, the first indication information includes a control parameter resolution and/or a quantity resolution of the base element.

With reference to the second aspect, in some implementations of the second aspect, the first indication information includes an attribute parameter resolution.

With reference to the second aspect, in some implementations of the second aspect, the method further includes: The second device sends second indication information to the first device, where the second indication information indicates a correspondence between the base element and a resolution, and the first indication information is an index of the correspondence.

With reference to the second aspect, in some implementations of the second aspect, the method further includes: The second device sends and/or receives a first environment map.

With reference to the second aspect, in some implementations of the second aspect, the second device sends and/or receives resolution information corresponding to the first environment map.

With reference to the second aspect, in some implementations of the second aspect, the first indication information includes a plurality of pieces of resolution information, and all of the plurality of pieces of resolution information correspond to different areas of the environment map and/or correspond to different sensing tasks.

With reference to the second aspect, in some implementations of the second aspect, correspondences between all of the plurality of pieces of resolution information and different areas of the environment map are indicated by area identifiers of the different areas, or are indicated by different time-frequency resources; and correspondences between all of the plurality of pieces of resolution information and different sensing tasks are indicated by identifiers of the different sensing tasks, or are indicated by the different time-frequency resources.

With reference to the second aspect, in some implementations of the second aspect, the method further includes: receiving sensing capability information sent by the first device; and determining the first indication information based on the sensing capability information.

According to a third aspect, an environment reconstruction method is provided. The method includes: A first device receives an environment map and resolution information corresponding to the environment map that are sent by a second device, where the environment map includes a base element.

For example, the first device may be a base station or a terminal device, and the second device may be a base station or a terminal device. After receiving the environment map and the resolution information corresponding to the environment map, the first device may perform resolution indication design based on the resolution information, to indicate another device (for example, the second device).

According to a fourth aspect, a communication apparatus is provided. The apparatus is configured to perform the method provided in any one of the first aspect to the third aspect. Specifically, the apparatus may include a unit and/or a module for performing the method provided in any one of the foregoing implementations of any one of the first aspect to the third aspect, for example, a processing unit and/or a communication unit.

In an implementation, the apparatus is a communication device (for example, a terminal device or a network device). When the apparatus is the communication device, the communication unit may be a transceiver or an input/output interface, and the processing unit may be at least one processor. Optionally, the transceiver may be a transceiver circuit. Optionally, the input/output interface may be an input/output circuit.

In another implementation, the apparatus is a chip, a chip system, or a circuit used in a communication device (for example, a terminal device or a network device). When the apparatus is the chip, the chip system, or the circuit used in the communication device, the communication unit may be an input/output interface, an interface circuit, an output circuit, an input circuit, a pin, a related circuit, or the like in the chip, the chip system, or the circuit, and the processing unit may be at least one processor, a processing circuit, a logic circuit, or the like.

According to a fifth aspect, a communication apparatus is provided. The apparatus includes: a memory, configured to store a program; and at least one processor, configured to execute a computer program or instructions stored in the memory, to perform the method provided in any one of the foregoing implementations of any one of the first aspect to the fourth aspect.

In an implementation, the apparatus is a communication device (for example, a terminal device or a network device). In another implementation, the apparatus is a chip, a chip system, or a circuit used in a communication device (for example, a terminal device or a network device).

According to a sixth aspect, this application provides a processor, configured to perform the methods provided in the foregoing aspects.

Sending, obtaining/receiving, and other operations related to the processor may be understood as output, input, and other operations of the processor, or sending and receiving operations performed by a radio frequency circuit and an antenna, unless otherwise specified or the operations conflict with actual functions or internal logic of the operations in related descriptions. This is not limited in this application.

According to a seventh aspect, a computer-readable storage medium is provided. The computer-readable medium stores program code to be executed by a device. The program code is used for performing the method provided in any one of the foregoing implementations of any one of the first aspect to the fourth aspect.

According to an eighth aspect, a computer program product including instructions is provided. When the computer program product is run on a computer, the computer is enabled to perform the method provided in any one of the foregoing implementations of any one of the first aspect to the fourth aspect.

According to a ninth aspect, a chip is provided. The chip includes a processor and a communication interface. The processor reads, through the communication interface, instructions stored in a memory, to perform the method provided in any one of the foregoing implementations of any one of the first aspect to the fourth aspect.

Optionally, in an implementation, the chip further includes the memory. The memory stores a computer program or the instructions. The processor is configured to execute the computer program or the instructions stored in the memory. When the computer program or the instructions are executed, the processor is configured to perform the method provided in any one of the foregoing implementations of any one of the first aspect to the fourth aspect.

According to a tenth aspect, a communication system is provided, including the foregoing first device and second device.

## BRIEF DESCRIPTION OF DRAWINGS

FIG. 1 is a diagram of a wireless communication system to which an embodiment of this application is applicable;
FIG. 2 is a diagram of adjusting a control parameter of a polygon according to an embodiment of this application;

FIG. 3 is a diagram of adjusting a control parameter of a curved surface according to an embodiment of this application;

FIG. 4 is a diagram of adjusting a control parameter of a voxel according to an embodiment of this application;

FIG. 5 is a diagram of adjusting a quantity of base elements according to an embodiment of this application;

FIG. 6 is a diagram of adjusting a quantity of base elements according to an embodiment of this application;

FIG. 7 is a schematic flowchart of an environment reconstruction method according to an embodiment of this application;

FIG. 8 is a diagram of resolution information corresponding to a base element according to an embodiment of this application;

FIG. 9 is a diagram of resolution information corresponding to a same base element according to an embodiment of this application;

FIG. 10 is a diagram of resolutions corresponding to different areas according to an embodiment of this application;

FIG. 11 is a diagram of a communication apparatus according to an embodiment of this application;

FIG. 12 is a diagram of another communication apparatus according to an embodiment of this application; and

FIG. 13 is a diagram of a chip system according to an embodiment of this application.

## DESCRIPTION OF EMBODIMENTS

The following describes the technical solutions of this application with reference to the accompanying drawings.

The technical solutions provided in this application may be applied to various communication systems, for example, a 6th generation (6th generation, 6G) system, a 5th generation (5th generation, 5G) or new radio (new radio, NR) system, a long term evolution (long term evolution, LTE) system, an LTE frequency division duplex (frequency division duplex, FDD) system, and an LTE time division duplex (time division duplex, TDD) system. The technical solutions provided in this application may be further applied to a future communication system. The technical solutions provided in this application may be further applied to device-to-device (device-to-device, D2D) communication, vehicle-to-everything (vehicle-to-everything, V2X) communication, machine-to-machine (machine-to-machine, M2M) communication, machine type communication (machine type communication, MTC), an internet of things (internet of things, IoT) communication system, or another communication system. The technical solutions provided in this application are also applicable to a wireless local area network (wireless local area network, WLAN), for example, support related institute of electrical and electronics engineers (institute of electrical and electronics engineers, IEEE) 802.11 standards, such as the 802.11a/b/g standard, the 802.11n standard, the 802.11ac standard, the 802.11ax standard, and a next-generation Wi-Fi protocol of IEEE 802.11ax, for example, 802.11be, Wi-Fi 7, extremely high throughput (extremely high throughput, EHT), 802.11ad, 802.11ay, or 802.11bf, or for another example, a next generation of 802.11be, like Wi-Fi 8; may be further applied to an ultra-wideband (ultra-wideband, UWB)-based wireless personal area network system, for example, 802.15 series standards; and may be further applied to a sensing (sensing) system, for example, 802.1 1bf series standards. The 802.11n standard is referred to as high throughput (high throughput, HT), the 802.11ac standard is referred to as a very high throughput (very high throughput, VHT) standard, the 802.11ax standard is referred to as a high efficiency (high efficiency, HE) standard, and the 802.11be standard is referred to as an extremely high throughput (extremely high throughput, EHT) standard. 802.11bf includes two major categories of standards: a low-frequency (for example, sub-7 GHz) standard and a high-frequency (for example, 60 GHz) standard. An implementation of sub-7 GHz mainly depends on 802.11ac, 802.11ax, 802.11be, and a next-generation standard. An implementation of 60 GHz mainly depends on 802.11ad, 802.11ay, and a next-generation standard. 802.11ad may also be referred to as a directional multi-gigabit (directional multi-gigabit, DMG) standard, and 802.11ay may also be referred to as an enhanced directional multi-gigabit (enhanced directional multi-gigabit, EDMG) standard.

A terminal device in embodiments of this application may also be referred to as user equipment (user equipment, UE), an access terminal, a subscriber unit, a subscriber station, a mobile station, a mobile console, a remote station, a remote terminal, a mobile device, a user terminal, a terminal, a wireless communication device, a user agent, or a user apparatus.

The terminal device may be a device that provides voice or data for a user, for example, a handheld device or a vehicle-mounted device with a wireless connection function. Currently, some examples of the terminal are a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self-driving (self-driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device with a wireless communication function, a computing device or another processing device connected to a wireless modem, a wearable device, a terminal device in a 5G network, and a terminal device in a future evolved public land mobile network (public land mobile network, PLMN). This is not limited in embodiments of this application.

As an example rather than a limitation, in embodiments of this application, the terminal device may alternatively be a wearable device. The wearable device may also be referred to as a wearable intelligent device, and is a general term for wearable devices that are intelligently designed and developed for daily wear by using a wearable technology, for example, glasses, gloves, a watch, clothing, and shoes. The wearable device is a portable device that is directly worn on a body or integrated into clothes or an accessory of a user. The wearable device is not only a hardware device, but also implements a powerful function through software support, data exchange, and cloud interaction. In a broad sense, wearable intelligent devices include full-featured and large-sized devices that can implement complete or partial functions without relying on smartphones, for example, smartwatches or smart glasses, and devices that focus only on one type of application function and need to be used in combination with other devices such as smartphones, for example, various smart bands or smart jewelry used for monitoring physical signs.

In embodiments of this application, an apparatus for implementing a function of the terminal device may be a terminal device, or may be an apparatus that can support a terminal device in implementing the function, for example, a chip system or a chip, where the apparatus may be mounted in the terminal device. In embodiments of this application, the chip system may include a chip, or may include a chip and another discrete component.

A network device in embodiments of this application may be a device for communicating with the terminal device. The network device may also be referred to as an access network device or a radio access network device. For example, the network device may be a base station. The network device in embodiments of this application may be a radio access network (radio access network, RAN) node (or device) that connects the terminal device to a wireless network. The base station may cover any of the following names in a broad sense, or may be replaced with the following names: for example, a NodeB (NodeB), an evolved NodeB (evolved NodeB, eNB), a next-generation NodeB (next-generation NodeB, gNB), a relay station, an access point, a transmission reception point (transmission reception point, TRP), a transmission point (transmission point, TP), a primary station, a secondary station, a multi-standard radio (multi-standard radio, MSR) node, a home base station, a network controller, an access node, a radio node, an access point (AP), a transmission node, a transceiver node, a baseband unit (BBU), a remote radio unit (remote radio unit, RRU), an active antenna unit (active antenna unit, AAU), a remote radio head (remote radio head, RRH), a central unit (central unit, CU), a distributed unit (distributed unit, DU), and a positioning node. The base station may be a macro base station, a micro base station, a relay node, a donor node, or the like, or a combination thereof. The base station may alternatively be a communication module, a modem, or a chip disposed in the foregoing device or apparatus. The base station may alternatively be a mobile switching center, a device that performs a function of a base station in D2D, V2X, or M2M communication, a network-side device in a 6G network, a device that performs a function of a base station in a future communication system, or the like. The base station may support networks of a same access technology or different access technologies. A specific technology and a specific device form that are used by the network device are not limited in embodiments of this application.

The base station may be fixed or mobile. For example, a helicopter or an uncrewed aerial vehicle may be configured as a mobile base station, and one or more cells may move based on a position of the mobile base station. In other examples, a helicopter or an uncrewed aerial vehicle may be configured as a device for communicating with another base station.

In some deployments, the network device mentioned in embodiments of this application may be a device including a CU or a DU, or a device including a CU and a DU, or a device including a CU-control plane (central unit-control plane (central unit-control plane, CU-CP)) node, a CU-user plane (central unit-user plane (central unit-user plane, CU-UP)) node, and a DU node.

The network device and the terminal device may be deployed on land, including being deployed indoors or outdoors, or in a handheld manner or a vehicle-mounted manner; may be deployed on water; or may be deployed on an airplane, a balloon, and a satellite in the air. A scenario in which the network device and the terminal device are located is not limited in embodiments of this application.

In embodiments of this application, the terminal device and the network device may transmit data in a plurality of data transmission modes. This is not limited in embodiments of this application.

An uplink data transmission mode is uplink transmission based on a dynamic grant (dynamic grant, DG) (also referred to as a dynamic uplink grant (dynamic UL grant)). In this mode, when a terminal needs to send user plane data to a base station, the terminal may monitor DCI delivered by the base station through a physical downlink control channel (physical downlink control channel, PDCCH). The DCI carries an uplink grant (uplink grant, UL grant). The uplink grant may be used to authorize the terminal to send uplink data on a specified time-frequency resource by using a specified parameter, for example, a specified modulation and coding scheme (modulation and coding scheme, MCS). Before monitoring the DCI, the terminal may first send a scheduling request (scheduling request, SR) to the base station through a physical uplink control channel (physical uplink control channel, PUCCH) or report a buffer state (buffer state, BS) to the base station through a physical uplink shared channel (physical uplink shared channel, PUSCH), to notify the base station of an uplink sending requirement or the buffer state, so that the base station can perform uplink grant and resource scheduling according to the requirement.

The terminal device may monitor the PDCCH based on a PDCCH configuration to obtain the DCI. The PDCCH configuration may include a control resource set (control resource set, CORESET) configuration, a search space (search space) configuration, a radio network temporary identifier (radio network temporary identifier, RNTI) configuration for scrambling/descrambling the PDCCH, a signaling format (format) configuration, or another configuration for PDCCH detection.

A time-frequency resource used to transmit the DCI belongs to a configured control resource set (control resource set, CORESET). The terminal device may detect a position of a candidate time-frequency resource in the CORESET to receive the DCI.

It can be understood that an uplink data transmission mode provided in embodiments of this application may further include data transmission in a random access (random access, RA) process or grant-free (grant-free, GF) data transmission. This is not specifically limited.

According to a similar principle, the network device in this application may send downlink data to the terminal device. The downlink data herein includes but is not limited to physical layer data. Generally, a downlink data communication process is as follows: The network device sends a PDCCH, where the PDCCH includes scheduling information (for example, DCI) for a physical downlink shared channel (physical downlink shared channel, PDSCH), the scheduling information for the PDSCH includes, for example, time-frequency resource information of the PDSCH, and the PDSCH carries downlink data sent by a base station to UE. The UE receives the downlink data from the network device based on scheduling of the PDCCH.

For ease of description, data in the following descriptions may include uplink data or downlink data. In addition, uplink data in this application may alternatively be replaced with downlink data. For example, "sending uplink data" and "receiving downlink data" are interchangeable, and "sending downlink data" and "receiving uplink data" are interchangeable.

Optionally, the technical solutions provided in embodiments of this application may also be applied to sidelink (sidelink, SL) communication. During the communication, one terminal device can initiate paging or access to another terminal device. For example, the technical solutions provided in embodiments of this application may be applied to a device-to-device (device-to-device, D2D) communication scenario, for example, an NR D2D communication scenario and/or an LTE D2D communication scenario; or may be applied to a vehicle-to-everything (vehicle-to-everything, V2X) communication scenario, for example, an NR V2X communication scenario, an LTE V2X communication scenario, an internet of vehicles communication scenario, and/or a vehicle-to-vehicle (vehicle-to-vehicle, V2V) communication scenario; or may be applied to the fields of intelligent driving, intelligent connected vehicles, and the like. Therefore, the data in this application may further include data in a sidelink communication scenario.

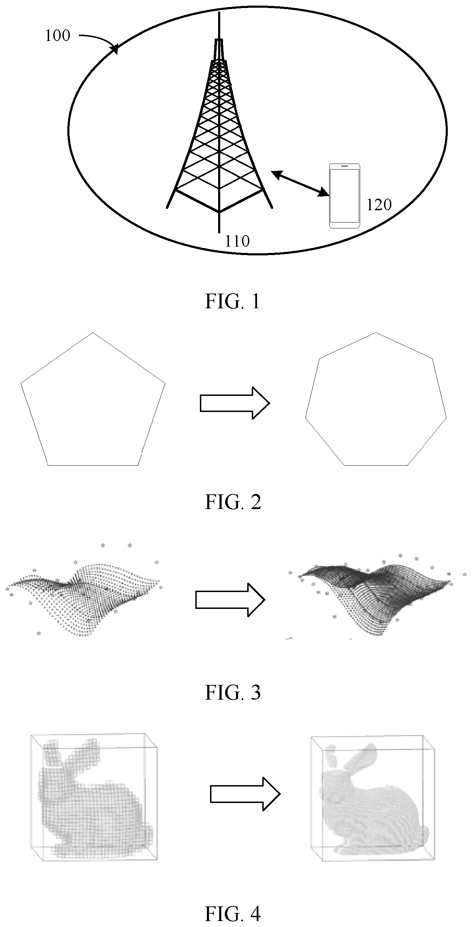

A communication system to which embodiments of this application are applicable is first briefly described with reference to FIG. 1. For example, FIG. 1 is a diagram of a wireless communication system 100 to which an embodiment of this application is applicable. As shown in FIG. 1, the wireless communication system 100 may include at least one network device, for example, a network device 110 shown in FIG. 1. The wireless communication system 100 may further include at least one terminal device, for example, a terminal device 120 shown in FIG. 1. For example, the network device and the terminal device each may be equipped with a plurality of antennas, and the network device and the terminal device may communicate with each other by using a multiple-antenna technology.

When the network device communicates with the terminal device, the network device may manage one or more cells, and one cell may include at least one terminal device. Optionally, the network device 110 and the terminal device 120 constitute a single-cell communication system. It is assumed that the cell is denoted as a cell #1. The network device 110 may be a network device in the cell #1, or the network device 110 may serve a terminal device (for example, the terminal device 120) in the cell #1.

It should be noted that the cell may be understood as an area within a coverage area of a radio signal of the network device.

It should be understood that FIG. 1 is merely an example simplified diagram for ease of understanding. The wireless communication system 100 may further include another network device or another terminal device that is not shown in FIG. 1.

With increasingly diversified application scenarios of wireless communication, a wireless communication process is oriented to more new scenarios, including sensing, imaging, environment reconstruction, and the like. Therefore, integrated sensing and communication (Integrated Sensing and Communication, ISAC) may be implemented in a communication system, to enable a communication function and a sensing function to complement each other. An entire communication network may serve as a huge sensor, to better sense and understand the physical world through transmission, reflection, and scattering of a radio wave. A wide range of new services, such as high-precision positioning, gesture capture, motion recognition, passive object detection and tracking, imaging, and environment reconstruction, may be provided by obtaining distance, speed, and angle information from a radio signal, to implement a "network as a sensor" (Network as a Sensor). In addition, high-precision positioning, imaging, and environment reconstruction capabilities provided through sensing can help improve communication performance, for example, more accurate beamforming, faster recovery from a beam failure, and lower overheads of terminal channel state information (Channel State Information, CSI) tracking, to implement "sensing-assisted communication". In this way, a parallel digital world can be reproduced for the physical world through real-time network sensing. This is crucial to implementation of a concept of "digital twin" in the future.

During environment reconstruction, a plurality of terminal devices may sense a same environment from different angles of view. Therefore, sensing results of the plurality of terminal devices may be sent to a base station, and the base station fuses the sensing results into a complete and large environment map, or performs another sensing task based on a fusion result, to reduce power consumption and transmission overheads of each terminal device. In addition, because the terminal devices may observe different angles of view, blocking or a blind area caused by an obstacle may be addressed by fusing the sensing results of the plurality of devices, to achieve finer-grained reconstruction or better task execution effect.

It should be noted that, in addition to the communication field, environment reconstruction may be further applied to other fields, for example, the game modeling field and the electronic map field.

Currently, raw environment information may be collected through optical scanning, a lidar, visual simultaneous localization and mapping (simultaneous localization and mapping, SLAM), remote sensing, light field reconstruction, or the like, and then the collected raw environment information is processed based on different environment reconstruction solutions. Data obtained by processing the raw environment information by using different algorithms is in different formats. Common environment reconstruction solutions, that is, a Draco algorithm, a three-dimensional Delaunay triangulation algorithm, an MPEG-GPCC scheme, and an MPEG-VPCC scheme, are used below as examples for description.

In the Draco algorithm, a KD-tree is used for spatial segmentation and quick search for point cloud data. Data exists in a format of a leaf node of a tree.

The three-dimensional Delaunay triangulation algorithm generates a constrained polyhedral model to represent different terrains, or uses a convex hull algorithm to extract a point cloud convex hull of raw point cloud data. Data exists in a format of a polyhedron.

In the MPEG-GPCC scheme, a space in which a three-dimensional point cloud is located is divided into eight subspaces based on a three-dimensional data representation of an octree voxel. For example, a subspace being 1 indicates that a point is included, and a subspace being 0 indicates that no point is included. The eight indication values are recorded. Then a subspace recorded as 1 at a first layer is further divided into eight subspaces, and eight indication values of the subspaces are recorded in the foregoing manner as indication values of a second layer. By analogy, same processing is performed at subsequent layers, to obtain an octree representing a raw point cloud.

In the MPEG-VPCC scheme, raw 3D point cloud data is projected to six surrounding planes, and a projection is processed in a conventional H.264 compression mode to obtain 2D data.

Different geometry types are generated in the foregoing solutions and algorithms, and different geometry types also have different data formats. For data formats of different geometry types, precision and a resolution are usually set, to ensure accuracy of environment reconstruction. Examples are described below.

In the Draco algorithm, density or a quantization level of a point cloud determines precision that can be provided by environment reconstruction.

In the MPEG-GPCC scheme, sizes of octree voxels represent different spatial resolutions, and attribute information may be adjusted by using a quantization level.

Compression precision in the MPEG-VPCC scheme is adjusted by using a quantization level.

In a solution in which patches are used for environment reconstruction, a larger quantity of patches and a smaller size of a patch usually indicate higher precision.

Currently, all the foregoing environment reconstruction solutions are applicable only to a single geometry type. In addition, in existing solutions, a configuration of an environment reconstruction resolution includes only a coarse-grained unified configuration and a configuration of quantization precision of numeric values. Therefore, the following problems exist:

(1) Lack of a standard and universality: Environment reconstruction with different geometry types and resolutions is needed for different application scenarios and different tasks, and there is no universal definition or solution.

(2) Increasing pressure on air interface transmission: Different data precision and resolutions are needed for different tasks and different spaces. If a unified configuration is used, a large amount of data is generated on a device side, causing huge pressure on air interface transmission in a data feedback and reporting stage.

(3) Difficulty in processing a complex structure: When a single geometry type is used to fit a complex geometric solid, many parameters may need to be introduced, leading to an increase in calculation complexity.

(4) Data storage problems: If a plurality of environment reconstruction solutions are used for environment reconstruction in a large-scale complex scenario, a large amount of complex data in different formats is generated, causing great challenges to data compression and storage.

(5) Poor capability of adapting to a dynamic environment: A solution with a single geometry type and a single resolution configuration can hardly adapt to a rapid change in an environment.

To sum up, embodiments of this application provide an environment reconstruction method, where base elements constituting an environment map are defined. The base elements may have different resolutions, and a terminal device may collect, process, and receive the base elements based on different resolutions. This can improve flexibility of environment reconstruction and reduce a data transmission size.

The base elements may be understood as basic elements that constitute the environment map. In other words, the environment map includes one or more types of base elements. The base element may include geometric characteristics. The geometric characteristics include a geometry type identifier and a geometric representation parameter corresponding to a geometry type. The geometric representation parameter indicates a position, a size, and other information of a geometry.

It can be understood that different types of geometry types correspond to different geometry type identifiers, and geometric representation parameters of geometry types of a same type may be the same or different.

The base element may indicate a geometry type of the base element by using geometric characteristics. The geometry type includes but is not limited to a point, a line, a surface, a voxel, a sphere, and a polyhedron. The line may include a straight line and a curve, and the surface may include a plane and a curved surface.

For example, the environment map includes a tall building. During information collection for the tall building, any one of the foregoing geometry types may be used to represent the tall building.

For example, a point cloud is used to represent the tall building.

For example, a polyhedron is used to represent the tall building.

The following sequentially describes the different geometry types mentioned above.

**Geometric characteristics of the point**

A geometry type identifier corresponding to the point may be an identifier #1. A geometric representation parameter of the point may be in a plurality of forms.

For example, the geometric representation parameter of the point may indicate a position of the point by using Cartesian coordinates: $(x, y, z)$.

For example, the geometric representation parameter of the point may indicate a position of the point by using polar coordinates: $(\theta, \varphi, r)$.

For example, the geometric representation parameter of the point may indicate a position of the point by using cylindrical coordinates: $(\phi, R, z)$.

**Geometric characteristics of the plane**

A geometry type identifier corresponding to the plane may be an identifier #2. A geometric representation parameter of the plane may be in a plurality of forms.

For example, the plane is a polygon, and a geometric representation parameter corresponding to the polygon may include a quantity of points and coordinates or an index of each point.

For example, the plane may be defined by a function expression. For example, the plane may be represented by ax+by+cz+d=0. A range of the plane is limited. Therefore, the range of the plane further needs to be determined. The range of the plane may be a constraint condition (for example, $x^2 + y^2 + z^2 \leq a$ ), or may be a value range of a variable (for example, x<a, y<b, z<c). The geometric representation parameter of the plane may include a, b, c, d, and the range of the plane, where a, b, and c may be referred to as plane parameters.

**Geometric characteristics of the** curved surface

A geometry type identifier corresponding to the curved surface may be an identifier #3. A geometric representation parameter of the curved surface may be in a plurality of forms.

For example, the curved surface is defined by a curved surface function. For example, the curved surface may be defined by an ellipsoidal equation: $\dfrac{x^2}{a^2} + \dfrac{y^2}{b^2} + \dfrac{z^2}{c^2} = 1$ . Similarly, a range of the curved surface may also be determined.

For brevity, details are not described herein again. The geometric representation parameter of the curved surface may include a, b, c, and the range of the curved surface, where a, b, and c may be referred to as curved surface parameters. For example, the curved surface may alternatively be a p×q-order B-spline curved surface:

$$P(u,v) = \sum_{i=0}^{m} \sum_{j=0}^{n} P_{i,j} N_{i,p}(u) N_{j,q}(v)$$ . The geometric representation parameter of the curved surface may include a control point sequence $P_{i,j}$ of the curved surface. Optionally, the geometric representation parameter of the curved surface may further include one or more of the following: a node sequence, and an order of the curved surface.

For example, the curved surface may be a non-uniform rational B-spline (non-uniform rational B-spline, BURBS) curved surface. The geometric representation parameter of the curved surface may include a control point sequence and a weight factor sequence of the curved surface. Optionally, the geometric representation parameter of the curved surface may further include one or more of the following: a node sequence, and an order of the curved surface.

**Geometric characteristics of the straight line**

A geometry type identifier corresponding to the straight line may be an identifier #4. A geometric representation parameter of the straight line may be in a plurality of forms.

For example, the geometric representation parameter of the straight line may be coordinates of two points, and the coordinates of the two points may be Cartesian coordinates, polar coordinates, or spherical coordinates.

For example, the geometric representation parameter of the straight line may be coordinates of a start point and a direction vector, and the coordinates of the start point may be Cartesian coordinates, polar coordinates, or spherical coordinates.

**Geometric characteristics of the curve**

A geometry type identifier corresponding to the curve may be an identifier #5. A geometric representation parameter of the curve may be in a plurality of forms.

For example, the curve may be defined by a function expression. For example, the curve may be represented by an elliptic equation: $\dfrac{x^2}{a^2} + \dfrac{y^2}{b^2} = c$ . Similarly, a range of the curve may be a constraint condition, or may be a value range of a variable. The geometric representation parameter of the curve may include a, b, c, and the range of the curve, where a, b, and c may be referred to as curve parameters.

For example, the curve may be a P-order B-spline curve. In this case, the geometric representation parameter of the curve may include a control point sequence $P_i$ of the curve. Optionally, the geometric representation parameter of the curve may further include one or more of the following: a node sequence, and an order of the curve.

The polyhedron may include a prism, a cone, and a cylinder. The cone includes a circular cone and a pyramid. Different types of polyhedrons may correspond to different geometric representation manners.

**Geometric characteristics of the prism**

A geometry type identifier corresponding to the prism may be an identifier #5. A geometric representation parameter of the prism may be in a plurality of forms.

For example, the prism includes a plurality of points from different planes. In this case, the geometric representation parameter of the prism may include a quantity of points and coordinates or an index of each point.

For example, the prism may be determined by determining points on a plane and a height of the prism. In this case, the geometric representation parameter of the prism may include a quantity of points, coordinates or an index of each point, and the height of the prism. It can be understood that, in this case, the points in the geometric representation parameter are points on a same plane.

**Geometric characteristics of the cylinder**

A geometry type identifier corresponding to the cylinder may be an identifier #6.

For example, a geometric representation parameter of the cylinder may include coordinates or an index of a center point, a radius, and a height. The center point may be a center point of a bottom surface of the cylinder.

Optionally, the geometric representation parameter of the cylinder may further include a direction of the cylinder.

**Geometric characteristics of the circular cone**

A geometry type identifier corresponding to the circular cone may be an identifier #7.

For example, a geometric representation parameter of the circular cone includes coordinates or an index of a center point, a radius, and a height of the circular cone. The center point may be a center point of a bottom surface of the circular cone.

Optionally, the height of the circular cone may be replaced with coordinates or an index of a vertex of the circular cone.

Optionally, the geometric representation parameter of the circular cone may further include a direction of the circular cone.

**Geometric characteristics of the pyramid**

A geometry type representation parameter corresponding to the pyramid may be an identifier #8.

For example, a geometric representation parameter of the prism includes a quantity of points on a bottom surface, coordinates or an index of each point, and a height of the pyramid.

Optionally, the height of the pyramid may be replaced with coordinates or an index of a vertex of the pyramid.

**Geometric characteristics of the sphere**

A geometry type identifier corresponding to the sphere may be an identifier #9.

A geometric representation parameter of the sphere may include coordinates or an index of a center point, and a radius. The center point of the sphere may also be referred to as a sphere center.

**Geometric characteristics of the voxel**

A geometry type identifier corresponding to the voxel may be an identifier #10. A geometric representation parameter of the voxel may be in a plurality of forms.

For example, the geometric representation parameter of the voxel includes a size of a voxel space, a size of a voxel unit, and information indicating whether each voxel unit is empty. The voxel space may be understood as a space for accommodating voxel units. The size of the voxel space is determined based on an object in the environment map.

For example, the geometric representation parameter of the voxel may include a quantity of voxel units in each direction of the voxel space, a size of a voxel unit, and information indicating whether each voxel unit is empty.

Optionally, the geometric representation parameter of the voxel may further include a start point of the voxel space.

**Geometric characteristics of an N-ary tree**

A geometry type identifier corresponding to the N-ary tree is an identifier #11.

A geometric representation parameter of the N-ary tree may include structure information of the tree. Information about all nodes may be obtained by horizontally traversing the tree (breadth-first) or vertically traversing the tree (depth-first). The node information may represent the structure information of the tree. For example, a specific bit string (in a hexadecimal form) obtained by horizontally traversing an octree is {0x98, 0xff, 0xf, 0x88, 0xff, 0xaa, 0xff, 0xaa, 0xff, 0xaa, 0xff, 0xaa, 0xf, 0xf, 0xf, 0xf, 0xff, 0xff}. The structure information of the tree may be directly represented by a bit string obtained by traversing the tree, or may be represented by an entropy-encoded bit string.

Optionally, the geometric representation parameters corresponding to the foregoing geometry types may further include a geometric transformation parameter, and the geometric transformation parameter is a parameter corresponding to geometric transformation. In embodiments of this application, the geometric transformation includes but is not limited to translation, rotation, and scaling.

Optionally, in addition to the geometric characteristics, the base element may further include attribute characteristics. The attribute characteristics may indicate physical properties of the base element, for example, a color, a material, a texture, a dielectric constant, magnetic permeability, a scattering coefficient, and mass. The attribute characteristics include an attribute identifier and an attribute parameter, and the attribute parameter may be represented by a quantity of quantization bits.

In embodiments of this application, the environment map may be constructed by using the foregoing base elements. During construction of the environment map, a resolution of the environment map may be further defined, and the resolution of the environment map may represent precision of the environment map. When the resolution is high, the precision of the environment map is high. When the resolution is low, the precision of the environment map is low. In embodiments of this application, the resolution of the environment map includes a control parameter resolution of the base element and a quantity resolution of the base element. The control parameter resolution of the base element is used to adjust a granularity of the base element by changing a control parameter of the base element, to adjust the resolution of the environment map. The quantity resolution of the base element is used to adjust a quantity of base elements within a unit size or a quantity of base elements in the environment map by adjusting a quantity of base elements, to adjust the resolution of the environment map.

The control parameter of the base element may be a part of the geometric representation parameter of the base element, or may not be a part of the geometric representation parameter of the base element. A granularity of a geometry type corresponding to the base element may be adjusted by changing the control parameter of the base element. Because the environment map includes the base element, when a resolution of the base element changes, the resolution of the environment map also changes. Therefore, in embodiments of this application, the control parameter of the base element may be used to adjust the resolution of the environment map. The control parameter of the base element is described below.

## Control parameter of the plane

When the plane is a polygon, with reference to the foregoing descriptions, a geometric representation parameter corresponding to the polygon may include a quantity of points and coordinates or an index of each point. It is easily understood that, when the polygon is used to represent an object in the environment map, a larger quantity of edges of the polygon indicates a finer granularity of the object represented by the polygon. Therefore, the resolution of the environment map may be adjusted by adjusting a quantity of edges of the polygon. The quantity of edges of the polygon is determined based on the quantity of points. Therefore, the control parameter of the plane may be the quantity of points, to be specific, a control parameter resolution of the plane may also be the quantity of points.

It can be understood that, when the polygon is used to represent an object in the environment map, a larger quantity of points indicates a higher resolution of the polygon and a higher resolution of the environment map.

FIG. 2 is a diagram of adjusting a control parameter of a polygon according to an embodiment of this application.

As shown in FIG. 2, after the quantity of points changes from 5 to 7, to be specific, the control parameter resolution of the polygon changes from 5 to 7, the polygon may change from a pentagon to a heptagon. An object represented by the heptagon is at a finer granularity. In other words, in comparison with a case in which the pentagon is used to represent an object, when the heptagon is used to represent the object, the resolution of the environment map can be increased.

## Control parameter of the curved surface

The curved surface may be a p×q-order B-spline curved surface: $P(u,v) = \sum_{i=0}^{m} \sum_{j=0}^{n} P_{i,j} N_{i,p}(u) N_{j,q}(v)$. A fitting degree of the curved surface may be changed by changing quantities m and n of control points in different directions. Therefore, the quantities m and n of control points are control parameters of the curved surface. Larger values of m and n indicate a higher fitting degree of the curved surface. To be specific, a control parameter resolution of the curved surface may be the quantities m and n of control points.

It can be understood that, when the curved surface is used to represent an object in the environment map, a larger quantity of control points indicates a higher resolution of the curved surface and a higher resolution of the environment map.

FIG. 3 is a diagram of adjusting a control parameter of a curved surface according to an embodiment of this application. As shown in FIG. 3, after the quantities m and n of control points (that is, star points in the figure) are increased, a fitting granularity of the curved surface can be finer, to increase the resolution of the environment map.

## Control parameter of the curve

The curve may be a p-order B-spline curve: $C(u) = \sum_{i=0}^{n} P_i N_{i,p}(u)$. Similar to the control parameter of the curved surface, the control parameter of the curve may be a quantity n of control points. To be specific, a control parameter resolution of the curve may be the quantity n of control points.

It can be understood that, when the curve is used to represent an object in the environment map, a larger quantity of control points indicates a higher resolution of the curve and a higher resolution of the environment map.

## Control parameter of the voxel

As described above, a geometric representation parameter of the voxel includes a size of a voxel space, a size of a voxel unit, and information indicating whether each voxel unit is empty. It is easily understood that, when the voxel is used to represent an object in the environment map, a larger quantity of voxel units indicates a finer granularity of the object represented by the voxel. Therefore, the resolution of the environment map may be adjusted by adjusting a size of a voxel unit. Therefore, the control parameter of the voxel may be the size of the voxel unit. To be specific, a control parameter resolution of the voxel may be the size of the voxel unit.

FIG. 4 is a diagram of adjusting a control parameter of a voxel according to an embodiment of this application.

As shown in FIG. 4, a size of a voxel unit may be reduced (or increased), so that a rabbit represented by the voxel is at a finer granularity, to increase the resolution of the environment map.

## Control parameter of the N-ary tree

The control parameter of the N-ary tree may be a depth of the N-ary tree. A larger depth of the N-ary tree indicates a higher resolution of the environment map. To be specific, a control parameter resolution of the N-ary tree may be the depth of the N-ary tree.

The foregoing describes the control parameter resolution of the base element. The following describes the quantity resolution of the base element.

In embodiments of this application, the resolution of the environment map may be adjusted by changing quantities of base elements with different geometry types. The geometry types may be the geometry types in the foregoing descriptions.

In some embodiments, the quantity resolution of the base element may be a quantity resolution of a base element within a unit size.

In some embodiments, the unit size may be determined based on an object in the environment map.

For example, if a quantity of curved surfaces within a unit size is 5, a quantity resolution of the curved surfaces is 5; and if a quantity of cylinders within a unit size is 10, a quantity resolution of the cylinders is 10.

In some embodiments, the quantity resolution of the base element may be a quantity resolution of a base element in the environment map.

For example, if a quantity of curved surfaces in the environment map is 100, a quantity resolution of the curved surfaces is 100.

It is easily understood that a larger quantity of geometry types being used to depict an object indicates a finer granularity of the depicted object, that is, a higher resolution of the environment map.

For example, the environment map includes a tall building, and 100,000 points or 1,000,000 points may be used to represent the tall building. When 1,000,000 points are used to represent the tall building, more details of the tall building can be depicted, and the resolution of the environment map is increased.

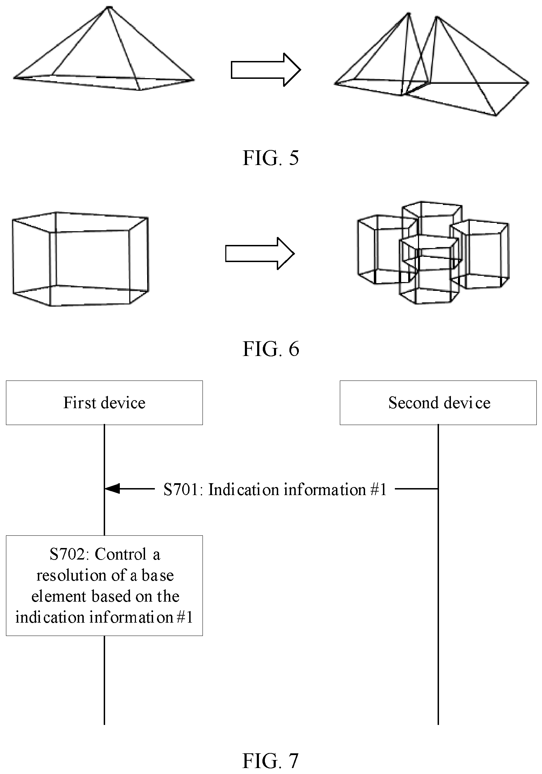

For another example, FIG. 5 is a diagram of adjusting a quantity of base elements according to an embodiment of this application.

As shown in FIG. 5, one pyramid may be used to represent an object, or two pyramids may be used to represent the object. That is, a quantity resolution of a base element changes from 1 to 2. After a quantity resolution of a base element within a unit size is increased, environment details can be better depicted.

For another example, FIG. 6 is a diagram of adjusting a quantity of base elements according to an embodiment of this application.

As shown in FIG. 6, one prism may be used to represent an object, or four pyramids may be used to represent the object. That is, a quantity resolution of a base element changes from 1 to 4. After a quantity resolution of a base element within a unit size is increased, a structure of a reconstructed object can be effectively depicted (there is a specific gap between prisms).

Optionally, the resolution of the environment map further includes an attribute parameter resolution of the base element. The attribute parameter resolution may be represented by a quantity of quantization bits, and different quantities of quantization bits correspond to different resolutions.

For example, a color resolution may be 5 bits or 10 bits. In comparison with a case in which the color resolution is 5 bits, when the color resolution is 10 bits, color details are added to an object depicted by the base element.

In embodiments of this application, the control parameter resolution of the base element and the attribute parameter resolution of the base element may be collectively referred to as a parameter resolution of the base element.

The foregoing describes the base elements constituting the environment map and the resolution of the environment map. The following describes the environment reconstruction method provided in embodiments of this application.

FIG. 7 is a schematic flowchart of an environment reconstruction method according to an embodiment of this application. As shown in FIG. 7, the method includes the following steps.

S701: A second device sends indication information #1 to a first device.

Correspondingly, the first device receives the indication information #1 sent by the second device. The information #1 indicates resolution information of an environment map.

In this application, information indicated by indication information is referred to as to-be-indicated information.

During specific implementation, the to-be-indicated information may be indicated in a plurality of manners, for example, but not limited to: The to-be-indicated information may be directly indicated, for example, the to-be-indicated information or an index of the to-be-indicated information is indicated. Alternatively, the to-be-indicated information may be indirectly indicated by indicating other information, where there is an association relationship between the other information and the to-be-indicated information. Alternatively, only a part of the to-be-indicated information may be indicated, and the other part of the to-be-indicated information is known or pre-agreed upon. For example, specific information may alternatively be indicated by an arrangement sequence of a plurality of pieces of information that is pre-agreed upon (for example, stipulated in a protocol), to reduce indication overheads to some extent.

In this embodiment of this application, types of the first device and the second device are not limited. For example, the first device may be a terminal device, and the second device may be a base station.

For example, the first device may be a base station, and the second device may be a terminal device.

For example, the first device may be a base station, and the second device may be a base station.

For example, the first device may be a terminal device, and the second device may be a terminal device.

Optionally, in some embodiments, the indication information #1 includes a control parameter resolution of a base element.

Optionally, in some embodiments, the indication information #1 includes a quantity resolution of a base element.

Optionally, in some embodiments, the indication information #1 includes an attribute parameter resolution of a base element.

Alternatively, in some embodiments, the first device may not obtain the first indication information through the second device.

For example, the indication information #1 is agreed upon in a protocol. In other words, the resolution information of the environment map may be agreed upon in a protocol.

For example, the indication information #1 may be preset on the first device.

In this embodiment of this application, a network device may indicate a resolution of the environment map in a plurality of indication manners. This is not specifically limited in this embodiment of this application. The following describes several manners as examples.

In a possible implementation, the first device includes indication information #2, where the indication information #2 indicates a correspondence between a base element and a resolution, and the indication information #1 is an index of the correspondence. The indication information #1 may be represented by an index value, an enumeration, a bitmap (bitmap), or the like.

For example, the correspondence may be represented by a resolution indication table. In this case, the indication information #1 is an index of the resolution indication table, so that the first device can determine a corresponding resolution based on the indication information #1. The resolution may be a threshold or a ground truth. For descriptions of the ground truth and the threshold, refer to the following descriptions.

For example, the resolution indication table may be configured by the second device. For example, the second device sends the resolution indication table by using radio resource control (radio resource control, RRC) signaling, media access control (media access control, MAC) signaling, and PDCCH signaling.

For example, the resolution indication table may be predetermined in a protocol.

For example, the resolution indication table may be preset on the first device.

For example, Table 1 shows a resolution indication table for a curved surface. As shown in Table 1, the resolution indication table includes an index and a quantity of control points of a curved surface. When the first device determines, based on the indication information #1, that the index is "0", the first device may determine, based on the index value and the resolution indication table, that the quantity of control points of the curved surface is 5. Therefore, when the first device generates or receives a curved surface, a quantity of control points of the curved surface is 5, or a quantity of control points of the curved surface cannot exceed 5.

Table 1 Resolution indication table for a curved surface

| Index | Quantity of control points of a curved surface |
|-------|------------------------------------------------|
| 0     | 5                                              |
| 1     | 10                                             |
| 2     | 15                                             |

For another example, Table 2 shows another resolution indication table for a curved surface. As shown in Table 2, the resolution indication table includes an index and a quantity of curved surfaces within a unit size. When the first device determines, based on the indication information #1, that the index is "0", the first device may determine, based on the index and the resolution indication table, that during generation or reception of curved surfaces, a quantity of curved surfaces is 10, or a quantity of curved surfaces cannot exceed 10.

Table 2 Resolution indication table for a curved surface

| Index | Quantity of curved surfaces |
|---|---|
| 0 | 10 |
| 1 | 20 |
| 2 | 30 |

For another example, Table 3 shows another resolution indication table for a curved surface. As shown in Table 3, the resolution indication table includes an index, a quantity of control points of a curved surface, and a quantity of curved surfaces within a unit size. When the first device determines, based on the indication information #1, that the index is "0", the first device may determine, based on the index and the resolution indication table, that a quantity of control points of a generated or received curved surface is 5 and a quantity of curved surfaces is 10, or a quantity of control points of a curved surface cannot exceed 5 and a quantity of curved surfaces cannot exceed 10.

Table 3 Resolution indication table for a curved surface

| Index | Quantity of control points of a curved surface | Quantity of curved surfaces within a unit size |
|---|---|---|
| 0 | 5 | 10 |
| 1 | 10 | 20 |
| 2 | 15 | 30 |

The indication information #1 may indicate the resolution of the environment map in the foregoing manners or in a manner other than the foregoing manners. The resolution of the environment map may be a threshold or a ground truth.

Optionally, in some embodiments, the indication information #1 may include a threshold corresponding to the control parameter resolution of the base element.

For example, a threshold of control points of a curved surface may be set to 20, and a threshold of control points of a curve may be set to 4. In this case, when the first device generates or receives a curved surface and a curve, control points corresponding to the curved surface and control points corresponding to the curve cannot exceed 20 and 4 respectively.

Optionally, in some embodiments, the indication information #1 may include a threshold corresponding to the quantity resolution of the base element.

For example, a threshold of a quantity of cylinders may be set to 4, and a threshold of a quantity of curved surfaces may be set to 10. In this case, when the first device generates or receives cylinders and curved surfaces, a quantity of cylinders and a quantity of curved surfaces cannot exceed 4 and 10 respectively.

Optionally, in some embodiments, the indication information #1 may include a threshold corresponding to the attribute parameter resolution of the base element.

For example, a threshold of a color resolution of a curved surface may be set to 10 bits. In this case, when the first device generates or receives a curved surface, a color resolution of the curved surface cannot exceed 10 bits.

Optionally, in some embodiments, the indication information #1 may include a ground truth corresponding to the control parameter resolution of the base element.

For example, a ground truth of control points of a curved surface may be set to 20, and a ground truth of control points of a curve may be set to 4. In this case, when the first device generates or receives a curved surface and a curve, control points corresponding to the curved surface and control points corresponding to the curve are 20 and 4 respectively.

Optionally, in some embodiments, the indication information #1 may include a ground truth corresponding to the quantity resolution of the base element.

For example, a ground truth of a quantity of cylinders may be set to 4, and a ground truth of a quantity of curved surfaces may be set to 10. In this case, when the terminal device generates or receives cylinders and curved surfaces, a quantity of cylinders and a quantity of curved surfaces are 4 and 10 respectively.

Optionally, in some embodiments, the indication information #1 may include a ground truth corresponding to the attribute resolution of the base element.

For example, a ground truth of a color resolution of a curved surface may be set to 10 bits. In this case, when the first device generates or receives a curved surface, a color resolution of the curved surface is 10 bits.

S702: The first device controls a resolution of the base element based on the indication information #1.

The first device receives the indication information #1, and may control the resolution of the base element based on the indication information #1.

In some embodiments, the first device may control a parameter resolution of the base element based on the indication information #1.

For example, the first device may control a control parameter resolution of a curve based on the indication information #1, that is, control a quantity of control points of the curve.

For another example, the first device may control an attribute parameter resolution of a curve based on the indication information #1.

In some embodiments, the first device may control the quantity resolution of the base element based on the indication information #1.

For example, the first device may control a quantity of cylinders within a unit size based on the indication information #1.

For another example, the first device may control a quantity of cylinders in the environment map based on the indication information #1.

That the first device controls the resolution of the base element may include the following several cases.

In a possible case, the first device controls the resolution of the base element when the environment map is sent.

For example, the indication information #1 indicates that a control parameter resolution of a curve is 4, in other words, a quantity of control points of a curve is 4. In this case, when the first device senses the environment map, a quantity of control points of a curve is not greater than 4.

For another example, the indication information #1 indicates that a quantity resolution of a cylinder is 10. In this case, when the first device senses the environment map, a quantity of cylinders within a unit size is not greater than 10, or a quantity of cylinders in the environment map is not greater than 10.

For another example, the indication information #1 indicates that a control parameter resolution of a curve is 4, a quantity resolution of a curve is 10, and a quantity resolution of a cylinder is 10. In this case, when the first device senses the environment map, a quantity of control points of a curve is not greater than 4, a quantity of curves within a unit size is not greater than 10 or a quantity of curves in the environment map is not greater than 10, and a quantity of cylinders within a unit size is not greater than 10 or a quantity of cylinders in the environment map is not greater than 10.

In a possible case, the first device controls the resolution of the base element when the environment map is received. For example, the indication information #1 indicates that a control parameter resolution of a curve is 4, and a control parameter resolution of a curve in the environment map received by the first device is 10. In this case, the first device may perform downsampling and other processing on the environment map, so that a control parameter resolution of a curve in the environment map changes to 4.

In this embodiment of this application, the environment map may include the base element, and the first device may determine the resolution of the environment map, and may further control the resolution of the base element, to improve flexibility of environment reconstruction. In addition, because a plurality of types of base elements are used, a complex structure in the environment map can be processed without introducing excessive parameters, to reduce calculation complexity.

Optionally, in some embodiments, the method further includes:

The first device sends a first environment map to the second device.

Specifically, after determining the resolution of the base element based on the indication information #1, the first device may sense an environment in which the first device is located, and send the first environment map to the second device, where the first environment map is associated with the environment in which the first device is located.

It can be understood that a resolution of the first environment map is associated with the resolution information indicated by the first indication information.

For example, the indication information #1 indicates that a control parameter resolution of a curve is 4. In this case, a quantity of control points of a curve in the first environment map is not greater than 4.

Optionally, in some embodiments, the method further includes:

The first device receives a first environment map sent by the second device.

Specifically, after determining the resolution of the base element based on the indication information #1, the first device may control the resolution of the first environment map based on the indication information #1 when receiving the first environment map.

For example, the indication information #1 indicates that a control parameter resolution of a curve is 4, and a control parameter resolution of a curve in the first environment map is 10. In this case, the control parameter resolution of the curve in the first environment map may be controlled to change to 4.

Alternatively, in some embodiments, before the first device obtains the first indication information, the second device may further send, to the first device, an environment map and resolution information corresponding to the environment map; and the first device may adjust a resolution after determining the resolution information of the environment map sent by the second device.

For example, the second device sends, to the first device, an environment map and resolution information corresponding to the environment map, where the resolution information indicates that a control parameter resolution of a curve is 10. Before the first device receives the foregoing information, a control parameter of a curve that is controlled by the first device is 4. If the first device supports the resolution, the first device may adjust the control parameter resolution of the curve to 10.

For another example, the second device sends, to the first device, an environment map and resolution information corresponding to the environment map, where the resolution information indicates that a control parameter resolution of a curve is 10. Before the first device receives the foregoing information, a control parameter resolution of a curve that is controlled by the first device is 4. If a maximum control parameter resolution of a curve that is supported by the first device is 8, the first device may keep the control parameter resolution of the curve at 4, or adjust the control parameter resolution of the curve to 8.

For another example, the second device sends, to the first device, an environment map and resolution information corresponding to the environment map, where the resolution information indicates that a control parameter resolution of a curve is 10. Before the first device receives the foregoing information, a control parameter resolution of a curve that is controlled by the first device is 20. The first device may keep the control parameter resolution of the curve at 4, or adjust the control parameter resolution of the curve to 10.

Optionally, in some embodiments, the method further includes:
The first device sends, to the second device, resolution information corresponding to the first environment map.

Specifically, when sending the first environment map to the second device, the first device may further send the resolution information corresponding to the first environment map.

In a possible implementation, each base element separately corresponds to one piece of resolution information.

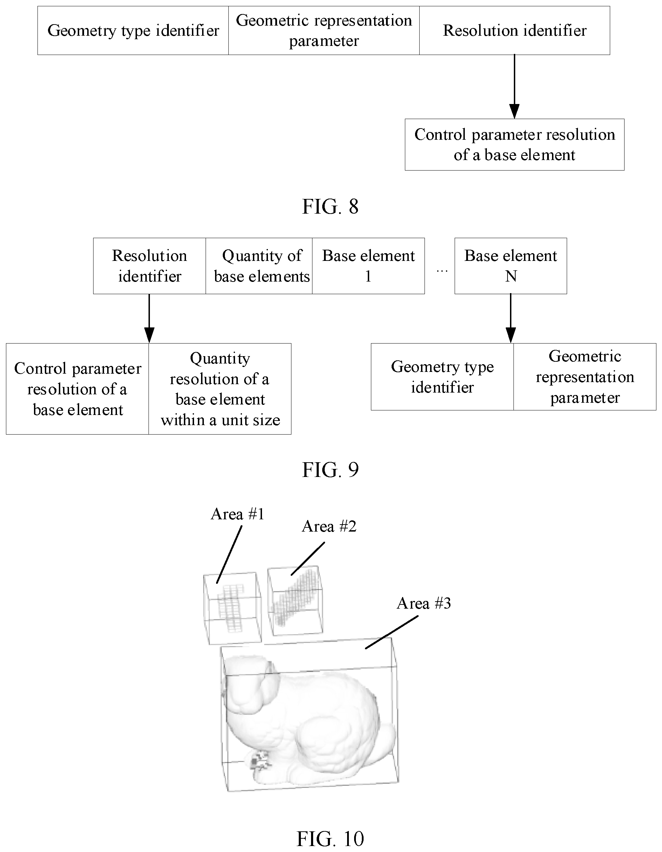

For example, as shown in FIG. 8, when the terminal device sends the resolution information of the first environment map to the network device, resolution information corresponding to each base element of the first environment map may include {a geometry type identifier, a geometric representation parameter, a resolution identifier}, where the resolution identifier includes {a control parameter resolution of a base element}.

Optionally, the resolution identifier may further include an attribute parameter resolution.

Optionally, the resolution information corresponding to each base element of the first environment map may further include attribute characteristics.

In a possible implementation, a same base element corresponds to one piece of resolution information.

For example, as shown in FIG. 9, when the terminal device sends the resolution information of the first environment map to the network device, a same base element may correspond to one piece of resolution information. The resolution information includes {a resolution identifier, a quantity N of base elements of the map, a base element of the map, a base element 2 of the map, ..., a base element N of the map}, where the resolution identifier may include {a control parameter resolution of a base element, a quantity resolution of a base element within a unit size}, and each base element of the map may include {a geometry type identifier, a geometric representation parameter}.

Optionally, the resolution identifier may further include an attribute parameter resolution.

Optionally, each base element may further include attribute characteristics.

Optionally, in some embodiments, the indication information #1 includes a plurality of pieces of resolution information, and all of the plurality of pieces of resolution information correspond to different areas of the environment map and/or correspond to different sensing tasks.

In this embodiment of this application, the environment map may be divided into a plurality of areas, and the plurality of areas respectively correspond to different resolution information. In other words, different areas of the environment map may correspond to different resolutions, and a same area may correspond to a same resolution.

For example, as shown in FIG. 10, a rabbit model is divided into three areas: an area #1, an area #2, and an area #3. A size of a voxel unit in the area #1 is greater than a size of a voxel unit in the area #2, and the size of the voxel unit in the area #2 is greater than a size of a voxel unit in the area #3. In addition, sizes of voxel units in the area #1 are the same, sizes of voxel units in the area #2 are the same, sizes of voxel units in the area #3 are the same.

In this embodiment of this application, different areas of the environment map may be determined based on a plurality of implementations. This is not limited in this embodiment of this application. The following describes several manners as examples.

In a possible implementation, a coordinate system is established, and different areas are determined based on different coordinate values. The coordinate system may be a Cartesian coordinate system, a polar coordinate system, a spherical coordinate system, or the like.

In a possible implementation, the environment map may be divided into a plurality of grids, and different areas are distinguished by different grid cells.

In a possible implementation, different areas are distinguished by different nodes of an N-ary tree (for example, an octree).

In this embodiment of this application, different sensing tasks may respectively correspond to different resolution information. In other words, for different sensing tasks, different resolutions may be used for sensing base elements of the environment map.

For example, a sensing task is building sensing, and the first device uses a high resolution when using a plane, a curved surface, and a polyhedron, and uses a low resolution when using a point and a voxel.

For example, a sensing task is environment reconstruction for intelligent driving. For an intersection or a sidewalk, a base element with a high resolution is used to represent a surrounding object. For a highway, a base element with a low resolution is used to represent a surrounding object.

In this embodiment of this application, resolutions of different areas of environment maps in different sensing tasks may correspond to different resolution information. In other words, different areas of environment maps in different sensing tasks may correspond to different resolutions, and a same area may correspond to a same resolution.

For example, a sensing task is multi-device environment reconstruction, and the first device uses a base element with a high resolution to represent an object nearby, and uses a base element with a low resolution to represent an object far away.

For example, a sensing task is environment reconstruction for intelligent driving, and the first device uses a base element with a high resolution to represent a pedestrian, a vehicle, or a lane line, and uses a base element with a low resolution to represent a surrounding tree or building.

For example, a sensing task is urban environment reconstruction, a base element with a high resolution is used to represent a complex central area, and a base element with a low resolution is used to represent a suburban area with a simple environment.

In this embodiment of this application, correspondences between all of the plurality of pieces of resolution information and different areas of the environment map, correspondences between all of the plurality of pieces of resolution information and different sensing tasks, and correspondences between all of the plurality of pieces of resolution information and different areas of environment maps in different sensing tasks may be indicated in a plurality of manners. The following describes several possible implementations as examples.

In a possible implementation, correspondences between different areas of the environment map and resolutions are indicated by a signaling indication, a table mapping, or the like, or correspondences between different sensing tasks and resolutions are indicated by an enumeration, a bitmap, or the like.

For example, the indication information #1 may include a plurality of pieces of the following information: {a space identifier, a geometry type {a curved surface, a cylinder, ...}, a resolution indication {a control parameter resolution of a curved surface, a quantity resolution of a base element within a unit size of a cylinder, ...} }.

For another example, the indication information #1 may include a plurality of pieces of the following information: {a task identifier, a geometry type {a curved surface, a cylinder, ...}, a resolution indication {a control parameter resolution of a curved surface, a quantity resolution of a base element within a unit size of a cylinder, ...} }.

For another example, the indication information #1 may include a plurality of pieces of the following information: {a task identifier, a geometry type {a curved surface, a cylinder, ...}, a resolution indication {a control parameter resolution of a curved surface, a quantity resolution of a base element within a unit size of a cylinder, ...} }, and {a space identifier, a geometry type {a curved surface, a cylinder, ...}, a resolution indication {a control parameter resolution of a curved surface, a quantity resolution of a base element within a unit size of a cylinder, ...} }.

For another example, the indication information #1 may include a plurality of pieces of the following information: {{a task identifier 1, a geometry type {a curved surface, a cylinder, ...}, a resolution indication {a control parameter resolution of a curved surface, a quantity resolution of a base element within a unit size of a cylinder, ...}}, {a task identifier 2, a geometry type {a curved surface, a cylinder, ...}, a resolution indication {a control parameter resolution of a curved surface, a quantity resolution of a base element within a unit size of a cylinder, ... }}, {a space identifier 1, a geometry type {a curved surface, a cylinder, ...}, a resolution indication {a control parameter resolution of a curved surface, a quantity resolution of a base element within a unit size of a cylinder, ...}}, {a space identifier 2, a geometry type {a curved surface, a cylinder, ...}, a resolution indication {a control parameter resolution of a curved surface, a quantity resolution of a base element within a unit size of a cylinder, ...}}}.

In a possible implementation, correspondences between time-frequency resources and different areas of the environment map and/or different sensing tasks are established. The indication information #1 may be sent or received on a specific time-frequency resource, so that resolutions corresponding to different areas of the environment map and/or different sensing tasks can be determined based on a correspondence between the indication information #1 and a time-frequency resource.

For example, a time-frequency resource #1 corresponds to a sensing task #1, the first device sends the indication information #1 on the time-frequency resource #1, and after receiving the indication information #1, the first device may determine the corresponding sensing task #1 based on the time-frequency resource #1, so that the first device can use a corresponding resolution when performing the sensing task #1.

In this embodiment of this application, different areas of the environment map and/or different sensing tasks may correspond to different resolutions, and the first device may perform sensing for different areas of the environment map and/or different sensing tasks by using different resolutions, to improve flexibility of environment reconstruction.

Optionally, in some embodiments, the method further includes:

The first device sends sensing capability indication information to the second device, and the second device determines the indication information #1 based on the sensing capability indication information.

Specifically, the first device may report, to the second device, a resolution of an environment map that is supported by the first device, so that the second device can indicate a resolution of an environment map based on a capability reported by the first device.

In this embodiment of this application, the second device may determine the resolution of the environment map based on a sensing capability reported by the first device, so that different resolutions of the environment map can be determined for different devices, to improve flexibility of environment reconstruction.

It can be understood that some optional features in embodiments of this application may be independent of other features in some scenarios, or may be combined with other features in some scenarios. This is not limited.

It can be further understood that the solutions in embodiments of this application may be appropriately combined for use, and explanations or descriptions of terms in the embodiments may be mutually referenced or explained in the embodiments. This is not limited.

It can be further understood that, in the foregoing method embodiments, the methods and the operations implemented by the first device may alternatively be implemented by a component (for example, a chip or a circuit) of the first device. In addition, the methods and the operations implemented by the second device may alternatively be implemented by a component (for example, a chip or a circuit) of the second device. This is not limited.

In correspondence to the methods provided in the foregoing method embodiments, embodiments of this application further provide a corresponding apparatus. The apparatus includes corresponding modules for performing the foregoing method embodiments. The modules may be software, hardware, or a combination of software and hardware. It can be understood that the technical features described in the method embodiments are also applicable to the following apparatus embodiments.

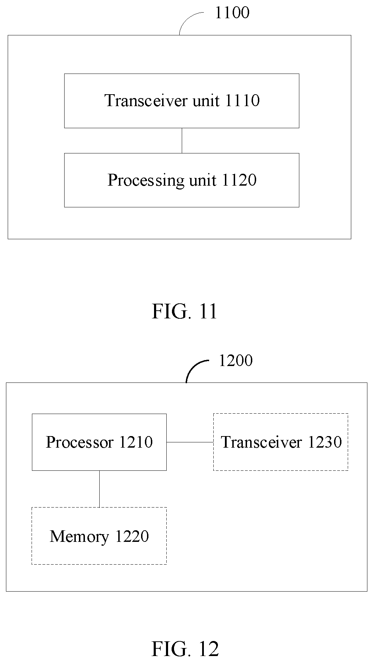

For example, FIG. 11 is a diagram of a communication apparatus 1100 according to an embodiment of this application. The apparatus 1100 includes an obtaining unit 1110 and a processing unit 1120. The obtaining unit 1110 may be configured to implement a corresponding communication function. The obtaining unit 1110 may also be referred to as a communication interface or a communication unit. The processing unit 1120 may be configured to process data or information.

Optionally, the apparatus 1100 further includes a storage unit. The storage unit may be configured to store instructions and/or data. The processing unit 1120 may read the instructions and/or the data in the storage unit, to enable the apparatus to implement the foregoing method embodiments.

In a possible design, the apparatus 1100 may be configured to perform the actions performed by the first device in the foregoing method embodiments. In this case, the apparatus 1100 may be the first device or a component of the first device. The transceiver unit 1110 is configured to perform a sending/receiving-related operation on the first device side in the foregoing method embodiments. The processing unit 1120 is configured to perform a processing-related operation on the first device side in the foregoing method embodiments.

In a possible implementation, the transceiver unit 1110 is configured to obtain first indication information, where the first indication information indicates resolution information of an environment map, and the environment map includes a base element; and the processing unit 1120 is configured to control a resolution of the base element based on the first indication information.

Optionally, the processing unit 1120 is specifically configured to control a parameter resolution and/or a quantity resolution of the base element based on the first indication information.

Optionally, a type of the base element includes a geometry type and/or an attribute type. The geometry type includes at least one of the following: a point, a straight line, a curve, a plane, a curved surface, a voxel, a sphere, a prism, a cylinder, a cone, and an octree. The attribute type includes at least one of the following: a material, a texture, a color, magnetic permeability, a dielectric constant, a scattering coefficient, and mass.

Optionally, the first indication information includes a control parameter resolution and/or the quantity resolution of the base element.

Optionally, the first indication information includes an attribute parameter resolution.

Optionally, the transceiver unit 1110 is further configured to obtain second indication information, where the second indication information indicates a correspondence between the base element and a resolution, and the first indication information is an index of the correspondence.

Optionally, the transceiver unit 1110 is further configured to send and/or receive a first environment map. Optionally, the transceiver unit 1110 is further configured to send and/or receive, for the first device, resolution information corresponding to the first environment map.

Optionally, the first indication information includes a plurality of pieces of resolution information, and all of the plurality of pieces of resolution information correspond to different areas of the environment map and/or correspond to different sensing tasks.

Optionally, correspondences between all of the plurality of pieces of resolution information and different areas of the environment map are indicated by area identifiers of the different areas, or are indicated by different time-frequency resources; and correspondences between all of the plurality of pieces of resolution information and different sensing tasks are indicated by identifiers of the different sensing tasks, or are indicated by the different time-frequency resources.

Optionally, the transceiver unit 1110 is further configured to send sensing capability information.

In another possible design, the apparatus 1100 may be configured to perform the actions performed by the second device in the foregoing method embodiments. In this case, the apparatus 1100 may be the second device or a component of the second device. The transceiver unit 1110 is configured to perform a sending/receiving-related operation on the second device side in the foregoing method embodiments. The processing unit 1120 is configured to perform a processing-related operation on the second device side in the foregoing method embodiments.

In a possible implementation, the transceiver unit 1110 is configured to send first indication information, where the first indication information indicates resolution information of an environment map, and the environment map includes a base element.

Optionally, a type of the base element includes a geometry type and/or an attribute type. The geometry type includes at least one of the following: a point, a straight line, a curve, a plane, a curved surface, a voxel, a sphere, a prism, a cylinder, a cone, and an octree. The attribute type includes at least one of the following: a material, a texture, a color, magnetic permeability, a dielectric constant, a scattering coefficient, and mass.

Optionally, the first indication information includes a control parameter resolution and/or a quantity resolution of the base element.

Optionally, the first indication information includes an attribute parameter resolution.

Optionally, the transceiver unit 1110 is further configured to send second indication information, where the second indication information indicates a correspondence between the base element and a resolution, and the first indication information is an index of the correspondence.

Optionally, the transceiver unit 1110 is further configured to send and/or receive a first environment map.

Optionally, the transceiver unit 1110 is further configured to send and/or receive resolution information corresponding to the first environment map.

Optionally, the first indication information includes a plurality of pieces of resolution information, and all of the plurality of pieces of resolution information correspond to different areas of the environment map and/or correspond to different sensing tasks.

Optionally, correspondences between all of the plurality of pieces of resolution information and different areas of the environment map are indicated by area identifiers of the different areas, or are indicated by different time-frequency resources; and correspondences between all of the plurality of pieces of resolution information and different sensing tasks are indicated by identifiers of the different sensing tasks, or are indicated by the different time-frequency resources.

Optionally, the transceiver unit 1110 is further configured to receive sensing capability information.

The processing unit 1120 is configured to determine the first indication information based on the sensing capability information.

It should be understood that the apparatus 1100 herein is embodied in a form of a functional unit. The term "unit" herein may be an application-specific integrated circuit (application-specific integrated circuit, ASIC), an electronic circuit, a processor (for example, a shared processor, a dedicated processor, or a group processor) configured to execute at least one software or firmware program, a memory, a combined logic circuit, and/or another appropriate component that supports the described function. In an optional example, a person skilled in the art can understand that the apparatus 1100 may be specifically the first device in the foregoing embodiments, and may be configured to perform the processes and/or the steps corresponding to the first device in the foregoing method embodiments. Alternatively, the apparatus 1100 may be specifically the second device in the foregoing embodiments, and may be configured to perform the processes and/or the steps corresponding to the second device in the foregoing method embodiments. To avoid repetition, details are not described herein again.

The apparatus 1100 in the foregoing solutions has a function of implementing corresponding steps performed by a communication device (for example, the terminal device or the network device) in the foregoing methods. The function may be implemented by hardware, or may be implemented by hardware executing corresponding software. The hardware or the software includes at least one module corresponding to the foregoing function. For example, the transceiver unit may be replaced with a transceiver (for example, a sending unit in the transceiver unit may be replaced with a transmitter, and a receiving unit in the transceiver unit may be replaced with a receiver), and another unit, for example, the processing unit, may be replaced with a processor, to respectively perform a sending/receiving operation and a processing-related operation in the method embodiments.

In addition, the transceiver unit 1110 may alternatively be a transceiver circuit (which may include, for example, a receiver circuit and a transmitter circuit), and the processing unit 1120 may be a processing circuit.

It should be noted that the apparatus in FIG. 11 may be a device in the foregoing embodiments, or may be a chip or a chip system, for example, a system-on-a-chip (system-on-a-chip, SoC). The transceiver unit may be an input/output circuit or a communication interface. The processing unit is a processor integrated in the chip, a microprocessor, or an integrated circuit. This is not limited herein.

For example, FIG. 12 is a diagram of another communication apparatus 1200 according to an embodiment of this application. The apparatus 1200 includes a processor 1210, and the processor 1210 is coupled to a memory 1220. Optionally, the apparatus 1200 further includes the memory 1220. The memory 1220 is configured to store a computer program or instructions and/or data. The processor 1210 is configured to execute the computer program or the instructions stored in the memory 1220, or read the data stored in the memory 1220, to perform the methods in the foregoing method embodiments.

Optionally, there is at least one processor 1210.

Optionally, there is at least one memory 1220.

Optionally, the memory 1220 and the processor 1210 are integrated together or disposed separately.

Optionally, as shown in FIG. 12, the apparatus 1200 further includes a transceiver 1230. The transceiver 1230 is configured to receive a signal and/or send a signal. For example, the processor 1210 is configured to control the transceiver 1230 to receive a signal and/or send a signal.

In a solution, the apparatus 1200 is configured to implement the operations performed by the first device in the foregoing method embodiments.

For example, the processor 1210 is configured to execute the computer program or the instructions stored in the memory 1220, to implement related operations of the first device in the foregoing method embodiments.

In another solution, the apparatus 1200 is configured to implement the operations performed by the second device in the foregoing method embodiments.

For example, the processor 1210 is configured to execute the computer program or the instructions stored in the memory 1220, to implement related operations of the second device in the foregoing method embodiments.

It should be understood that the processor mentioned in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, a discrete hardware component, or the like. The general-purpose processor may be a microprocessor, or the processor may be any conventional processor or the like.

It should be further understood that the memory mentioned in embodiments of this application may be a volatile memory and/or a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. By way of example rather than limitation, the RAM includes the following forms: a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that, when the processor is a general-purpose processor, a DSP, an ASIC, an FPGA or another programmable logic device, a discrete gate or transistor logic device, or a discrete hardware component, a memory (storage module) may be integrated into the processor.

It should be further noted that the memory described in this specification is intended to include but is not limited to these memories and any other appropriate type of memory.

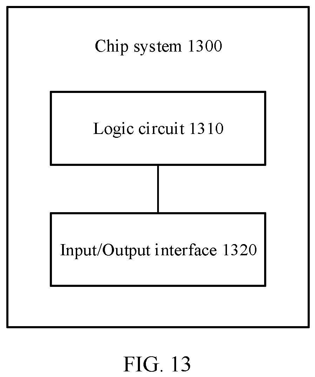

For example, FIG. 13 is a diagram of a chip system 1300 according to an embodiment of this application. The chip system 1300 (which may also be referred to as a processing system) includes a logic circuit 1310 and an input/output interface (input/output interface) 130.

The logic circuit 1310 may be a processing circuit in the chip system 1300. The logic circuit 1310 may be coupled and connected to a storage unit, and invoke instructions in the storage unit, to enable the chip system 1300 to implement the methods and the functions in embodiments of this application. The input/output interface 1320 may be an input/output circuit in the chip system 1300, and outputs information processed by the chip system 1300, or inputs to-be-processed data or signaling information to the chip system 1300 for processing.

Specifically, for example, if the chip system 1300 is installed on a terminal device, the logic circuit 1310 is coupled to the input/output interface 1320, and the input/output interface 1320 may input a wake-up signal to the logic circuit 1310 for processing.

In a solution, the chip system 1300 is configured to implement the operations performed by the first device in the foregoing method embodiments.

For example, the logic circuit 1310 is configured to implement a processing-related operation performed by the first device in the foregoing method embodiments, and the input/output interface 1320 is configured to implement a sending-related operation and/or a receiving-related operation performed by the first device in the foregoing method embodiments.

In another solution, the chip system 1300 is configured to implement the operations performed by the second device in the foregoing method embodiments.

For example, the logic circuit 1310 is configured to implement a processing-related operation performed by the second device in the foregoing method embodiments, and the input/output interface 1320 is configured to implement a sending-related operation and/or a receiving-related operation performed by the second device in the foregoing method embodiments.

An embodiment of this application further provides a computer-readable storage medium. The computer-readable storage medium stores computer instructions for implementing a method performed by a device in the foregoing method embodiments.

For example, when the computer program is executed by a computer, the computer is enabled to implement the method performed by the terminal device in the foregoing method embodiments.

For another example, when the computer program is executed by a computer, the computer is enabled to implement the method performed by the network device in the foregoing method embodiments.

An embodiment of this application further provides a computer program product, including instructions. When the instructions are executed by a computer, the method performed by the terminal device or the network device in the foregoing method embodiments is implemented.

An embodiment of this application further provides a communication system. The communication system includes the terminal device and the network device in the foregoing embodiments.

For descriptions of related content and beneficial effects of any one of the apparatuses provided above, refer to a corresponding method embodiment provided above. Details are not described herein again.

In the several embodiments provided in this application, it should be understood that the disclosed apparatuses and methods may be implemented in other manners. For example, the described apparatus embodiments are merely examples. For example, division into the units is merely logical function division. During actual implementation, another division manner may be used. For example, at least two units or components may be combined or integrated into another system, or some features may be ignored or not performed. In addition, the shown or discussed mutual couplings, direct couplings, or communication connections may be implemented through some interfaces. The indirect couplings or communication connections between the apparatuses or units may be implemented in an electrical form, a mechanical form, or other forms.

All or some of the foregoing embodiments may be implemented by software, hardware, firmware, or any combination thereof. When the embodiments are implemented by software, all or some of the embodiments may be implemented in a form of a computer program product. The computer program product includes at least one computer instruction. When the computer program instruction is loaded and executed on a computer, all or some of the processes or the functions according to embodiments of this application are generated. The computer may be a general-purpose computer, a dedicated computer, a computer network, or another programmable apparatus. For example, the computer may be a personal computer, a server, or a network device. The computer instruction may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible to a computer, or a data storage device, for example, a server or a data center, integrating at least one usable medium. The usable medium may be a magnetic medium (for example, a floppy disk, a hard disk drive, or a magnetic tape), an optical medium (for example, a DVD), a semiconductor medium (for example, a solid-state drive (solid-state drive, SSD)), or the like. For example, the usable medium may include but is not limited to any medium that can store program code, for example, a USB flash drive, a removable hard disk drive, a read-only memory (read-only memory, ROM), a random access memory (random access memory, RAM), a magnetic disk, or a compact disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. An environment reconstruction method, wherein the method comprises:

obtaining, by a first device, first indication information, wherein the first indication information indicates resolution information of an environment map, and the environment map comprises a base element; and

controlling, by the first device, a resolution of the base element based on the first indication information.

2. The method according to claim 1, wherein controlling, by the first device, the resolution of the base element based on the first indication information comprises:

controlling, by the first device, a parameter resolution and/or a quantity resolution of the base element based on the first indication information.

3. The method according to claim 1 or 2, wherein a type of the base element comprises a geometry type and/or an attribute type; the geometry type comprises at least one of the following: a point, a straight line, a curve, a plane, a curved surface, a voxel, a sphere, a prism, a cylinder, a cone, and an octree; and the attribute type comprises at least one of the following: a material, a texture, a color, magnetic permeability, a dielectric constant, a scattering coefficient, and mass.

4. The method according to any one of claims 1 to 3, wherein the first indication information comprises a control parameter resolution and/or the quantity resolution of the base element.

5. The method according to any one of claims 1 to 4, wherein the first indication information comprises an attribute parameter resolution.

6. The method according to any one of claims 1 to 5, wherein the method further comprises:

obtaining, by the first device, second indication information, wherein the second indication information indicates a correspondence between the base element and a resolution, and the first indication information is an index of the correspondence.

7. The method according to any one of claims 1 to 6, wherein the method further comprises:

sending and/or receiving, by the first device, a first environment map based on the first indication information.

8. The method according to claim 7, wherein the method further comprises:

sending and/or receiving, by the first device, resolution information corresponding to the first environment map.

9. The method according to any one of claims 1 to 8, wherein the first indication information comprises a plurality of pieces of resolution information, and all of the plurality of pieces of resolution information correspond to different areas of the environment map and/or correspond to different sensing tasks.

10. The method according to claim 9, wherein correspondences between all of the plurality of pieces of resolution information and different areas of the environment map are indicated by area identifiers of the different areas, or are indicated by different time-frequency resources; and

correspondences between all of the plurality of pieces of resolution information and different sensing tasks are indicated by identifiers of the different sensing tasks, or are indicated by the different time-frequency resources.

11. The method according to any one of claims 1 to 10, wherein the first indication information is received from a second device, or is agreed upon in a protocol, or is preset on the first device.

12. The method according to claim 11, wherein the first indication information is received from the second device, and the method further comprises:

sending, by the first device, sensing capability information to the second device, to enable the second device to determine the first indication information based on the sensing capability information.

13. An environment reconstruction method, wherein the method comprises:

sending, by a second device, first indication information to a first device, wherein the first indication information indicates resolution information of an environment map, and the environment map comprises a base element, to enable the first device to control a resolution of the base element based on the first indication information.

14. The method according to claim 13, wherein a type of the base element comprises a geometry type and/or an attribute type; the geometry type comprises at least one of the following: a point, a straight line, a curve, a plane, a curved surface, a voxel, a sphere, a prism, a cylinder, a cone, and an octree; and the attribute type comprises at least one of the following: a material, a texture, a color, magnetic permeability, a dielectric constant, a scattering coefficient, and mass.

15. The method according to claim 13 or 14, wherein the first indication information comprises a control parameter resolution and/or a quantity resolution of the base element.

16. The method according to any one of claims 13 to 15, wherein the first indication information comprises an attribute parameter resolution.

17. The method according to any one of claims 13 to 16, wherein the method further comprises:
sending, by the second device, second indication information to the first device, wherein the second indication information indicates a correspondence between the base element and a resolution, and the first indication information is an index of the correspondence.

18. The method according to any one of claims 13 to 17, wherein the method further comprises:
sending and/or receiving, by the second device, a first environment map.

19. The method according to claim 18, wherein the method further comprises:
sending and/or receiving, by the second device, resolution information corresponding to the first environment map.

20. The method according to any one of claims 13 to 19, wherein the first indication information comprises a plurality of pieces of resolution information, and all of the plurality of pieces of resolution information correspond to different areas of the environment map and/or correspond to different sensing tasks.

21. The method according to claim 20, wherein correspondences between all of the plurality of pieces of resolution information and different areas of the environment map are indicated by area identifiers of the different areas, or are indicated by different time-frequency resources; and
correspondences between all of the plurality of pieces of resolution information and different sensing tasks are indicated by identifiers of the different sensing tasks, or are indicated by the different time-frequency resources.

22. The method according to any one of claims 13 to 21, wherein the method further comprises:

receiving sensing capability information sent by the first device; and
determining the first indication information based on the sensing capability information.

23. A communication apparatus, comprising a module or a unit for performing the method according to any one of claims 1 to 22.

24. A communication apparatus, comprising a processor, wherein the processor is configured to execute a computer program or instructions stored in a memory, to enable the apparatus to perform the method according to any one of claims 1 to 22.

25. The apparatus according to claim 24, wherein the apparatus further comprises the memory and/or a communication interface, and the communication interface is coupled to the processor; and
the communication interface is configured to input and/or output information.

26. A computer-readable storage medium, wherein the computer-readable storage medium stores a computer program or instructions, and when the computer program or the instructions are run on a communication apparatus, the communication apparatus is enabled to perform the method according to any one of claims 1 to 22.

FIG. 1

FIG. 2

FIG. 3

FIG. 4

FIG. 5

FIG. 6

| First device | Second device |
|---|---|

S701: Indication information #1

S702: Control a resolution of a base element based on the indication information #1

FIG. 7

| Geometry type identifier | Geometric representation parameter | Resolution identifier |
| --- | --- | --- |

| Control parameter resolution of a base element |
| --- |

FIG. 8

| Resolution identifier | Quantity of base elements | Base element 1 | ... | Base element N |
| --- | --- | --- | --- | --- |

| Control parameter resolution of a base element | Quantity resolution of a base element within a unit size |
| --- | --- |

| Geometry type identifier | Geometric representation parameter |
| --- | --- |

FIG. 9

FIG. 10

1100

Transceiver unit 1110

Processing unit 1120

FIG. 11

1200

Processor 1210

Transceiver 1230

Memory 1220

FIG. 12

Chip system 1300

Logic circuit 1310

Input/Output interface 1320

FIG. 13

# INTERNATIONAL SEARCH REPORT

| | International application No. |
|---|---|
| | **PCT/CN2023/122676** |

| A. | CLASSIFICATION OF SUBJECT MATTER |
|---|---|

G06T 17/05(2011.01)i; H04W4/38(2018.01)i

According to International Patent Classification (IPC) or to both national classification and IPC

| B. | FIELDS SEARCHED |
|---|---|

Minimum documentation searched (classification system followed by classification symbols)

IPC: G06T, H04W

Documentation searched other than minimum documentation to the extent that such documents are included in the fields searched

Electronic data base consulted during the international search (name of data base and, where practicable, search terms used)

CNABS, CNTXT, WOTXT, VEN, EPTXT, USTXT, IEEE, CNKI: 环境重构, 环境地图, 几何, 几何标识, 几何特性, 分辨率, 精度, 属性特性, 通信感知, environment reconstruction, environment map, geometry, geometry characteristic, attribute characteristic, accuracy, resolution, ISAC, SAPE

| C. | DOCUMENTS CONSIDERED TO BE RELEVANT |
|---|---|

| Category* | Citation of document, with indication, where appropriate, of the relevant passages | Relevant to claim No. |
|---|---|---|
| A | BAYESTEH, Alireza et al. "通信感知一体化——从概念到实践 (Non-official tranlation: Integrated Sensing and Communication-From Concept to Practice)" 华为研究 *(Huawei Research)*, No. 2, 15 September 2022 (2022-09-15), text, pages 4-21 | 1-26 |
| A | WO 2023011564 A1 (HUAWEI TECHNOLOGIES CO., LTD.) 09 February 2023 (2023-02-09) entire document | 1-26 |
| A | WO 2023155655 A1 (HUAWEI TECHNOLOGIES CO., LTD.) 24 August 2023 (2023-08-24) entire document | 1-26 |
| A | ZHANG, Ping et al. "Toward Wisdom-Evolutionary and Primitive-Concise 6G: A New Paradigm of Semantic Communication Networks" *Engineering*, Vol. 8, No. 1, 31 January 2022 (2022-01-31), text, pages 60-73 | 1-26 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **28 May 2024** | **03 June 2024** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

INTERNATIONAL SEARCH REPORT
Information on patent family members

International application No.

**PCT/CN2023/122676**

| Patent document cited in search report | | | Publication date (day/month/year) | Patent family member(s) | | | Publication date (day/month/year) |
|---|---|---|---|---|---|---|---|
| WO | 2023011564 | A1 | 09 February 2023 | EP | 4369750 | A1 | 15 May 2024 |
| | | | | CN | 115706955 | A | 17 February 2023 |
| WO | 2023155655 | A1 | 24 August 2023 | CN | 116669062 | A | 29 August 2023 |

Form PCT/ISA/210 (patent family annex) (July 2022)